# EUROPEAN PATENT APPLICATION

(11) **EP 4 671 123 A1**
(43) Date of publication of application: **31.12.2025**
(21) Application number: 24760102.4
(22) Date of filing: 05.02.2024
(51) Int. Cl.: B64C 3/56, B64U 10/13, B64U 20/30

(54) **FLYING BODY, FOLDING METHOD, AND ARRANGEMENT METHOD**

(30) Priority: 24.02.2023 JP 2023027728; 11.09.2023 JP 2023147011
(71) Applicant: Skydrive Inc., Tokyo 102-0093 (JP)
(72) Inventor: ADACHI, Naohito, Tokyo 1020093 (JP); COVILLE, Arnaud, Tokyo 1020093 (JP); KOBAYASHI, Shinichi, Tokyo 1020093 (JP); OKADA, Shinji, Tokyo 1020093 (JP); TOMITA, Masatoshi, Tokyo 1020093 (JP); OCHI, Akio, Tokyo 1020093 (JP); SHEEN, Phillip, Tokyo 1020093 (JP); YOSHIDA, Narihiro, Tokyo 1020093 (JP)
(74) Representative: Winter, Brandl - Partnerschaft mbB
(86) International application number: PCT/JP2024/003694
(87) International publication number: WO 2024/176796

(57) **Abstract**

[Problem] To provide a flying body having a rotor frame that is more optimized than in the past, a folding method for the rotor frame, and an arrangement method for the rotor frame, etc.

[Solution] One aspect of the present invention provides a flying body. The flying body comprises a fuselage, a rotor frame, and rotors. The fuselage supports the rotor frame. The rotor frame supports the rotors. Each rotor is configured to be capable of rotating in the position in which the rotor is supported by the rotor frame. The rotor frame includes a first frame part, a second frame part, and a contact point portion constituting a point of contact between the first frame part and the second frame part. The rotor frame is configured to be capable of being folded such that a free end of the first frame part and a free end of the second frame part approach one another.

## Description

### BACKGROUND

The present invention relates to an aircraft, a folding method and an arrangement method.

### RELATED ART

PTL 1 discloses an unmanned aircraft.

The unmanned aircraft includes a plurality of horizontal rotors having a horizontal rotor blade, and a vertical rotor having a vertical rotor blade which is a variable-pitch propeller, and to address the above issue, there is provided an operation method for the unmanned aircraft including a plurality of horizontal rotors having a horizontal rotor blade, and a vertical rotor having a vertical rotor blade which is a variable-pitch propeller, the operation method including an idling step in which the fuselage is moved by the plurality of horizontal rotors while idling the vertical rotor with zero or approximately zero pitch angle of the vertical rotor.

### PRIOR ART DOCUMENTS

### Patent document

PTL 1: Japanese Unexamined Patent Application Publication No. 2022-095292

### SUMMARY

### Problems to be Solved by Invention

However, in the unmanned aircraft disclosed in PTL 1, the rotor frame is not sufficiently optimized, thus there is room for improvement.

In consideration of the above-mentioned circumstances, the present invention provides an aircraft including a rotor frame more optimized than in the past, a folding method for the rotor frame, and an arrangement method for the rotor frame.

### Means for Solving Problems

According to an aspect of the present invention, an aircraft is provided. The aircraft includes a fuselage, a rotor frame, and rotors. The fuselage supports the rotor frame. The rotor frame supports each rotor. The rotor is configured to be rotatable at the position at which the rotor is supported by the rotor frame. The rotor frame includes a first frame portion, a second frame portion, and a contact point portion forming a contact point between the first frame portion and the second frame portion. The rotor frame is configured to be folded such that a free end of the first frame portion and a free end of the second frame portion approach one another.

### BRIEF DESCRIPTION OF DRAWINGS

[Fig. 1] Fig. 1 is a perspective view illustrating an overview of an aircraft 100.
[Fig. 2] Fig. 2 is a partially enlarged view of part of the aircraft 100.
[Fig. 3] Fig. 3 is a view illustrating the configuration of a rotor frame 120.
[Fig.4] Fig. 4 is a view illustrating an example of a state in which the rotor frame 120 is folded.
[Fig. 5] Fig. 5 is a view illustrating another example of a state in which the rotor frame 120 is folded.
[Fig. 6] Fig. 6 is a view illustrating another form of the rotor frame 120.
[Fig. 7] Fig. 7 is a perspective view illustrating an overview of an aircraft 300.
[Fig. 8] Fig. 8 is a partially enlarged view of part of the aircraft 300.
[Fig. 9] Fig. 9 is a perspective view illustrating the arrangement of rotors 330 in the aircraft 300.
[Fig. 10] Fig. 10 is a front view illustrating the arrangement of the rotors 330 in the aircraft 300.
[Fig. 11] Fig. 11A is a rotational surface 340 of a rotor 332 which is an example of a first rotor, Fig. 11B is a tangent plane 410 to a virtual curved surface 400, and Fig. 11C is a view illustrating the composite view of Fig. 11A and Fig. 11B.

### DETAILED DESCRIPTION

Hereinafter, an embodiment of the present invention will be described using the drawings. The various features presented in the embodiments shown below may be combined each other.

### <First Embodiment>

### 1. Overview of Aircraft 100

In the first section, an overview of an aircraft 100 will be described.

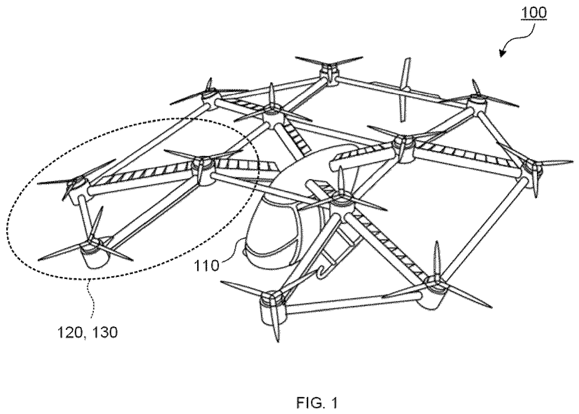

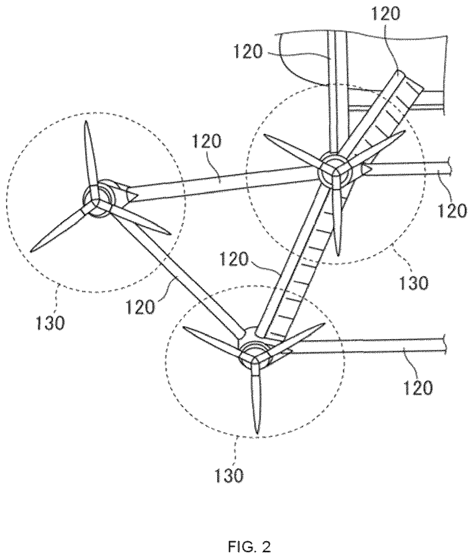

Fig. 1 is a perspective view illustrating an overview of the aircraft 100. Fig. 2 is a partially enlarged view of part of the aircraft 100. The aircraft 100 is a manned aircraft capable of vertical takeoff and landing. The aircraft 100 includes a fuselage 110, rotor frames 120 and rotors 130. The present embodiment is preferably used in a large rotor frame used for a manned aircraft. These components will be further described.

The fuselage 110 is located in approximately the center of the aircraft 100. The fuselage 110 supports a plurality of rotor frames 120. The fuselage 110 includes an internal passenger compartment which is not illustrated. The passenger compartment is configured to accommodate passengers. The fuselage 110 may have a streamlined shape to reduce the air resistance when flying forward.

The rotor frames 120 are supported by the fuselage 110 above the fuselage 110. The rotor frames 120 are configured to expand outwardly from the support positions in the fuselage 110. The rotor frames 120 each support the rotors 130 at both ends of the rotor frame 120. The material for the rotor frames 120 may be carbon fiber reinforced plastics (CFRP). The rotor frames 120 may have a mesh structure in which a plurality of rod-shaped members are connected to each other. The details of the rotor frames 120 will be described below.

Each rotor 130 is supported by the rotor frames 120 above the rotor frames 120. The rotor 130 is configured to be rotatable at the position at which the rotor 130 is supported by the rotor frames 120. The rotor 130 generates buoyancy force and thrust force of the aircraft 100 by being rotated by a motor which is not illustrated. The rotational speed and rotational direction of the rotor 130 are controlled by a control system which is not illustrated.

### 2. Details of Rotor Frame 120

In the second section, the details of the rotor frame 120 will be escribed.

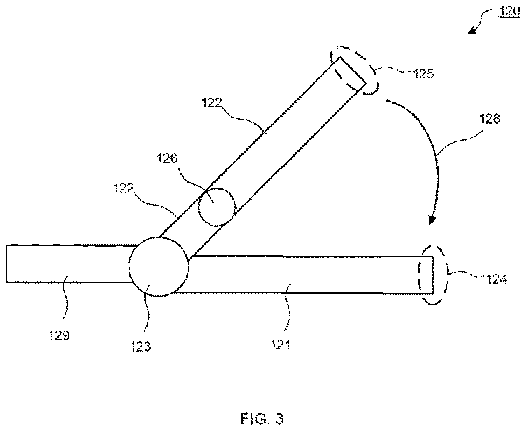

Fig. 3 is a view illustrating the configuration of the rotor frame 120. The rotor frame 120 includes a first frame portion 121, a second frame portion 122, a contact point portion 123, a movable pivot 126, and a third frame portion 129.

The first frame portion 121 is formed in a rod shape. The first frame portion 121 is connected to the second frame portion 122 and the third frame portion 129 at the contact point portion 123. The first frame portion 121 has a free end 124 at the end opposite from the contact point portion 123.

The second frame portion 122 is formed in a rod shape. The second frame portion 122 is connected to the first frame portion 121 and the third frame portion 129 at the contact point portion 123. The second frame portion 122 has a free end 125 at the end opposite from the contact point portion 123.

The contact point portion 123 forms the contact point between the first frame portion 121, the second frame portion 122, and the third frame portion 129. The first frame portion 121, the second frame portion 122, the contact point portion 123 and the third frame portion 129 may be separate members which are to be joined together, or may be integrally formed as the entire rotor frame 120.

The rotor frame 120 supports the rotor 130 at the contact point portion 123. Therefore, at the contact point portion 123, the rotor 130, a motor (not illustrated) to drive the rotor 130, and wiring related to the motor are disposed. Thus, the contact point portion 123 is a portion on which a load is concentrated in the rotor frame 120.

The movable pivot 126 is disposed in the second frame portion 122. The movable pivot 126 is disposed at a position away from the contact point portion 123 by a predetermined distance. The movable pivot 126 may be e.g., a folding hinge. Here, the predetermined distance is e.g., 10 to 500 mm, preferably 50 to 200 mm, and more preferably 100 to 300 mm. The predetermined distance may be e.g., the distance from the central position of the rotor 130 supported at the contact point portion 123 to the central position of the movable pivot 126.

Specifically, the predetermined distance is e.g., 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 mm, or within the range between any two of the numerical values illustrated here.

When it is assumed that the length of the second frame portion 122 is 10, and the length from the contact point portion 123 to the movable pivot 126 is a predetermined distance, the movable pivot 126 may be disposed, for example, between 1 and 9, preferably between 2 and 8, and more preferably between 3 and 7. Specifically, the movable pivot 126 may be at the position of e.g., 1, 1.5, 2, 2.5, 3, 3.5, 4, 4.5, 5, 5.5, 6, 6.5, 7, 7.5, 8, 8.5, 9, or within the range between any two of the numerical values illustrated here.

As mentioned above, the contact point portion 123 is a portion on which a load is concentrated, thus fatigue is likely to be accumulated. Thus, reduction in the strength of the aircraft 100 can be prevented by avoiding a load concentrated portion and providing a folding mechanism (the movable pivot 126).

The third frame portion 129 is formed in a rod shape. The third frame portion 129 is connected to the first frame portion 121 and the second frame portion 122 at the contact point portion 123. The third frame portion 129 is disposed on the opposite side of the first frame portion 121 with respect to the contact point portion 123. The third frame portion 129 and the first frame portion 121 are formed to extend in substantially the same direction.

In the present embodiment, the rotor frame 120 presents a Y shape. According to this aspect, the rotor frame presenting a Y shape can be preferably used.

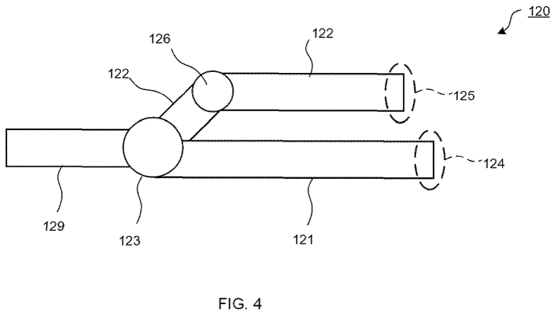

Fig. 4 is a view illustrating an example of a state in which the rotor frame 120 is folded. The rotor frame 120 is configured to be folded such that the free end 124 of the first frame portion 121 and the free end 125 of the second frame portion 122 approach each other. The second frame portion 122 is swung around the movable pivot 126 as a fulcrum such that the free end 125 of the second frame portion 122 and the free end 124 of the first frame portion 121 approach each other. Specifically, the second frame portion 122 is swung in the direction of an arrow 128 from the position before folding illustrated in Fig. 3, and folded such that the free end 124 and the free end 125 approach each other. In other words, the rotor frame 120 is configured to allow the second frame portion 122 to be folded around the movable pivot 126 as a fulcrum.

According to this aspect, reduction in the strength of the entire aircraft 100 can be prevented by adopting a configuration in which a load concentrated portion is folded to avoid the portion. Specifically, in the configuration of the present embodiment, fatigue is accumulated in the contact point portion 123 by a concentrated load on the contact point portion 123, which leads to reduction in the strength of the entire aircraft 100. Thus, reduction in the strength of the entire aircraft 100 can be prevented by adopting the folding mechanism for the movable pivot 126 disposed at a position away from the contact point portion 123.

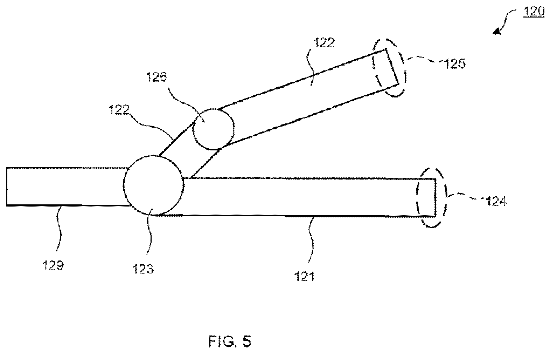

Fig. 5 is a view illustrating another example of a state in which the rotor frame 120 is folded. The movable pivot 126 may have a locking mechanism. The movable pivot 126 is locked, for example, in a state before the second frame portion 122 is folded, but does not need to be locked in a range of motion after the start of folding. In other words, the second frame portion 122 is configured to be swingable stepless in a range of motion.

According to this aspect, the rotor frame 120 can be fixed and transported using jigs in various forms without limiting the form of jigs.

### 3. Details of Rotor Frame 220

In the third section, the details of a rotor frame 220 will be described.

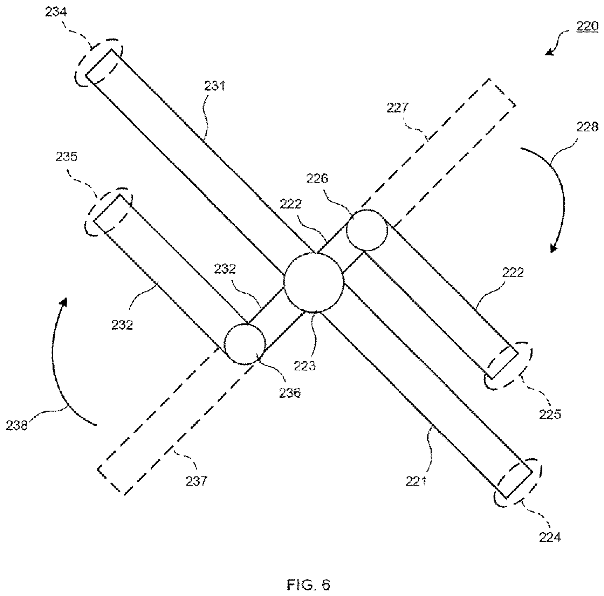

Fig. 6 is a view illustrating another form of the rotor frame. The rotor frame 220 includes a first frame portion 221, a second frame portion 222, a contact point portion 223, a movable pivot 226, a first frame portion 231, a second frame portion 232, and a movable pivot 236.

The first frame portion 221 is formed in a rod shape. The first frame portion 221 is connected to the second frame portion 222, the first frame portion 231 and the second frame portion 232 at the contact point portion 223. The first frame portion 221 has a free end 224 at the end opposite from the contact point portion 223.

The second frame portion 222 is formed in a rod shape. The second frame portion 222 is connected to the first frame portion 221, the first frame portion 231 and the second frame portion 232 at the contact point portion 223. The second frame portion 222 has a free end 225 at the end opposite from the contact point portion 223.

The contact point portion 223 forms the contact point between the first frame portion 221, the second frame portion 222, the first frame portion 231, and the second frame portion 232. The first frame portion 221, the second frame portion 222, the first frame portion 231 and the second frame portion 232 may be separate members joined together, or may be integrally formed as the entire rotor frame 220.

The rotor frame 220 supports the rotor 130 at the contact point portion 223. Therefore, at the contact point portion 223, the rotor 130, a motor (not illustrated) to drive the rotor 130, and wiring related to the motor are disposed. Thus, the contact point portion 223 is a portion on which a load is concentrated in the rotor frame 220.

The movable pivot 226 is disposed in the second frame portion 222. The movable pivot 226 is disposed at a position away from the contact point portion 223 by a predetermined distance. The movable pivot 226 may be e.g., a folding hinge. Here, the predetermined distance is e.g., 10 to 500 mm, preferably 50 to 200 mm, and more preferably 100 to 300 mm. The predetermined distance may be e.g., the distance from the central position of the rotor 130 supported at the contact point portion 223 to the central position of the movable pivot 226.

Specifically, the predetermined distance is e.g., 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 mm, or within the range between any two of the numerical values illustrated here.

When it is assumed that the length of the second frame portion 222 is 10, and the length from the contact point portion 223 to the movable pivot 226 is a predetermined distance, the movable pivot 226 may be disposed, for example, between 1 and 9, preferably between 2 and 8, and more preferably between 3 and 7. Specifically, the movable pivot 226 may be at the position of e.g., 1, 1.5, 2, 2.5, 3, 3.5, 4, 4.5, 5, 5.5, 6, 6.5, 7, 7.5, 8, 8.5, 9, or within the range between any two of the numerical values illustrated here.

As mentioned above, the contact point portion 223 is a portion on which a load is concentrated, thus fatigue is likely to be accumulated. Thus, reduction in the strength of the aircraft 100 can be prevented by avoiding a load concentrated portion and providing a folding mechanism (the movable pivot 226 and the movable pivot 236).

The first frame portion 231 is formed in a rod shape. The first frame portion 231 is connected to the second frame portion 232, the first frame portion 221 and the second frame portion 222 at the contact point portion 223. The first frame portion 231 has a free end 234 at the end opposite from the contact point portion 223.

The second frame portion 232 is formed in a rod shape. The second frame portion 232 is connected to the first frame portion 231, the first frame portion 221 and the second frame portion 222 at the contact point portion 223. The second frame portion 232 has a free end 235 at the end opposite from the contact point portion 223.

The movable pivot 236 is disposed in the second frame portion 232. The movable pivot 236 is disposed at a position away from the contact point portion 223 by a predetermined distance. Here, the predetermined distance is e.g., 10 to 500 mm, preferably 50 to 200 mm, and more preferably 100 to 300 mm. The predetermined distance may be e.g., the distance from the central position of the rotor 130 supported at the contact point portion 223 to the central position of the movable pivot 236.

Specifically, the predetermined distance is e.g., 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 mm, or within the range between any two of the numerical values illustrated here.

When it is assumed that the length of the second frame portion 232 is 10, and the length from the contact point portion 223 to the movable pivot 236 is a predetermined distance, the movable pivot 236 may be disposed, for example, between 1 and 9, preferably between 2 and 8, and more preferably between 3 and 7. Specifically, the movable pivot 236 may be at the position of e.g., 1, 1.5, 2, 2.5, 3, 3.5, 4, 4.5, 5, 5.5, 6, 6.5, 7, 7.5, 8, 8.5, 9, or within the range between any two of the numerical values illustrated here.

The second frame portion 222 is swung around the movable pivot 226 as a fulcrum so that the free end 225 of the second frame portion 222 and the free end 224 of the first frame portion 221 approach each other. Specifically, the second frame portion 222 is swung in the direction of an arrow 228 from the position (position 227) before folding, and folded such that the free end 224 and the free end 225 approach each other.

The second frame portion 232 is swung around the movable pivot 236 as a fulcrum such that the free end 235 of the second frame portion 232 and the free end 234 of the first frame portion 231 approach each other. Specifically, the second frame portion 232 is swung in the direction of an arrow 238 from the position (position 237) before folding, and folded such that the free end 234 and the free end 235 approach each other.

As shown in the present embodiment, the rotor frame is not limited to a specific shape, and the rotor frame in a bulky shape can be made compact.

### 4. Operation

In the fourth section, the operation of the first embodiment will be described.

The size of the rotor frame 120 varies with the size of the fuselage 110. When the aircraft 100 is an unmanned aircraft, the size of the fuselage 110 is often relatively small, thus the rotor frame 120 is also relatively small similarly. In contrast, when the aircraft 100 is a manned aircraft, the fuselage 110 needs to increase in size to allow passengers to board, and accordingly, the rotor frame 120 also increases in size.

When the aircraft 100 is transported to another location, the aircraft 100 is disassembled into parts, and transported by land or sea. For example, the rotor frame 120 is normally transported by a shipping container which is compliant with ISO standards. However, for a large rotor frame 120, the size of the shipping container exceeds the size according to ISO standards, thus a problem arises in that the transportation cost increases.

Thus, the rotor frame 120 may be divided into parts, and transported as a solution; however, wiring related to the motor that rotates the rotor 130 supported by the rotor frame 120 needs to be cut, thus rigging at the time of re-assembling becomes difficult.

Thus, as in the present embodiment, the rotor frame 120 is configured to be folded so that the size of the rotor frame 120 in a bulky shape at the time of transportation can be reduced. Specifically, the rotor frame 120 is configured to be folded so that it can be transported in a shipping container which is compliant with ISO standards, thus the transportation cost can be reduced.

### 5. Modifications

In the fifth section, a modification of the first embodiment will be described.

An aspect of the present embodiment may provide a folding method. The folding method includes a preparation step, and a folding step. In the preparation step, a rotor frame 120 is prepared which includes the first frame portion 121, the second frame portion 122, and the contact point portion 123 forming the contact point between the first frame portion 121 and the second frame portion 122. In the folding step, the rotor frame 120 is folded such that the free end 124 of the first frame portion 121 and the free end 125 of the second frame portion 122 approach each other.

According to this aspect, as in the aircraft 100 of the present embodiment, the rotor frame in a bulky shape can be made compact.

### < Second Embodiment>

### 6. Overview of Second Embodiment

In the sixth section, an overview of the second embodiment will be described.

### 6-1. Name of Second Embodiment

### Rotor Layout to Prevent Secondary Damage due to Rotor Breakage

### 6-2. Conventional Art

In other aircrafts in conventional art among aircrafts having a plurality of rotors, the other aircrafts are not structured such that when a rotor is broken, damage to other rotors or the fuselage is avoided. Thus, severe damage has been prevented by increasing the number of rotors to enhance the redundancy, and reinforcing the structure. This causes a complicated fuselage, and an increase in the fuselage weight.

Content: Structure that at the time of propeller breakage of a multicopter, gives no damage to other propellers or the fuselage structure.

### 6-3. Problems to Be Solved by Second Embodiment

In a conventional structure, at the time of propeller breakage, broken pieces may collide with other propellers or the fuselage structure, and as a result of functional damage, the aircraft may crash. To cope with this, the number of rotors is increased to ensure redundancy which results in a complicated fuselage, or the fuselage is reinforced to prevent breakage, causing an increase in the weight. The weight increase has caused decrease in the payload, reduction in the flight range, or degradation of the performance.

### 6-4. Solution to Problem

Each rotor is arranged on a convex curved surface that encloses the entire fuselage structure, and the rotational surface of the rotor is set to be tangent to the curved surface, thus an optimal distance between rotors can be maintained, and an appropriate angle of the rotor can be set so that a layout is achieved in which broken pieces at the time of rotor breakage do not interfere with the other rotors and the fuselage structure, and give no damage to the other rotors or the fuselage. The arrangement method is provided in which the angle of the laterally thrown rotor at the time of rotor breakage is predicted to prevent collision with other rotors.

### 6-5. Advantages of Second Embodiment

Because any rotor gives no damage to the other rotors and the fuselage, it is not necessary to set additional components needed for reinforcement to avoid damage to the fuselage structure, thus weight reduction can be achieved. In addition, secondary damage due to broken pieces of a rotor does not need to be considered, thus consideration of redundancy or the like can be reduced, therefore simplification of the system can be achieved, and redundancy of rotors can be reduced. Furthermore, at the time of rotor breakage, additional power needs to be set by other rotors to generate thrust to compensate the lift force; however, since the degree of breakage of the rotor can be reduced, the emergency output needed at the time of breakage can be decreased, and the power required for the motor and battery or the like can be lowered, thus the lightweighting effect of the entire fuselage is obtained. Due to these effects, increase of the payload and extension of the flight range of the fuselage itself are made possible, thus the performance of the fuselage itself can be improved.

### 6-6. Example

In this example, a sphere that encloses the body fuselage is set, rotors are arranged on the spherical surface, and the rotational surface of each rotor is set to be tangent to the surface of the sphere. The bold blue line indicates the rotors, and a gray portion indicates the fuselage structure. The black dashed line indicates the sphere which is set in this example, and each rotor is set on the spherical surface so that the rotational surface is tangent to the sphere. The space between the rotors is set so that the rotors do not interfere with each other. The blue thin line indicates a path of a thrown rotor when the rotor is broken due to collision with a bird or the like. The blue thin line does not intersect any of the other rotors or the body fuselage, thus the rotor does not collide with the other rotors or the body fuselage. Thus, conventionally, reinforcement of the fuselage is needed to prevent breakage of a body fuselage region with which a broken rotor has collided, and the thrust of other rotors needs to be enhanced by further increasing the number of spare rotors in case of breakage of other rotors by the broken rotor; however, these redundancy can be reduced.

### 6-7. Other Examples, Appendix to Be Described

In addition, similar setting can be easily made with an ellipsoid like a rugby ball, which encloses the body fuselage structure. Furthermore, setting can be made with a convex curved surface which encloses the body fuselage structure. Furthermore, a cone or a cylinder may be set to enclose the sphere which has been set, and rotors with a changed angle can also be arranged by similarly arranging the rotors on the surface of the previously set cone or cylinder.

### 6-8. Implemented Aspects

### (8-1) Method of Arranging Rotors to Prevent Collision Therebetween Even If Rotors Are Laterally Thrown. (8-2) Aircraft with Plurality of Rotors Arranged on Curved Surface. (8-3) Aircraft in Which Curved Surface Is Spherical. (8-4) Aircraft Is Manned Aircraft.

(1) An aircraft comprising: a fuselage; and a plurality of rotors, wherein the fuselage supports the plurality of rotors, the plurality of rotors are arranged such that the fuselage or the other rotors are not located on a plane extending in a radial direction of the rotational surface of the rotor.
(2) In the aircraft according to (1), wherein the plurality of rotors are arranged on a virtual curved surface which is outside the fuselage and convex outwardly of the fuselage.
(3) The aircraft according to (2), wherein the plurality of rotors are arranged such that the rotational surface and a tangent plane to the curved surface approximately match.
(4) The aircraft according to (2) or (3), wherein the curved surface is a spherical surface.
(5) The aircraft according to any one of (1) to (4), wherein the aircraft is a manned aircraft.
(6) An arrangement method comprising: a preparation step; and an arrangement step, wherein in the preparation step, a fuselage and a plurality of rotors are prepared, in the arrangement step, the plurality of rotors are supported by the fuselage and arranged such that when a first rotor is broken, a second rotor or the fuselage does not collide with the fuselage.
(7) The arrangement method according to (6), wherein in the arrangement step, the plurality of rotors are arranged such that the fuselage or the second rotor is not located on a plane extending in a radial direction of a rotational surface of the rotor.

### 7. Overview of Aircraft 300

In the seventh section, an overview of the aircraft 300 will be described.

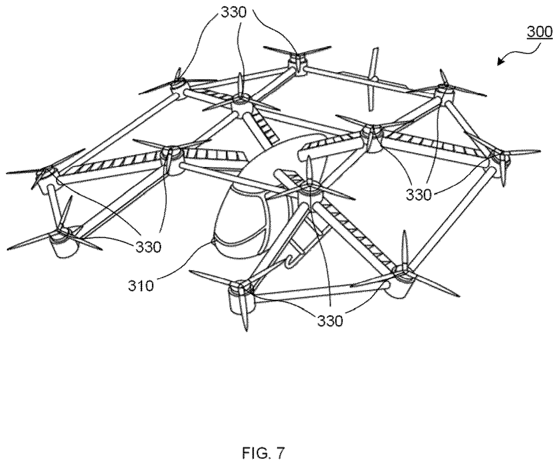

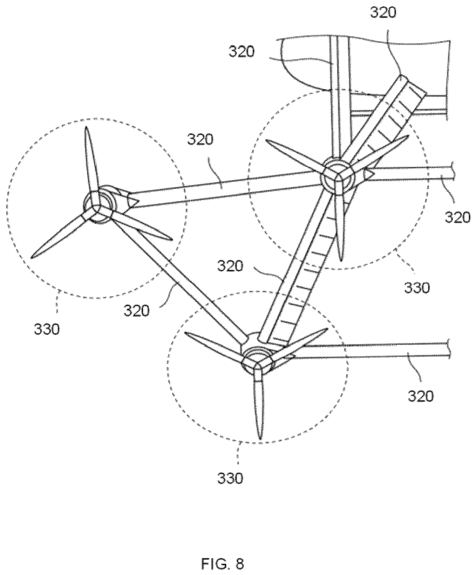

Fig. 7 is a perspective view illustrating an overview of the aircraft 300. Fig. 8 is a partially enlarged view of part of the aircraft 300. In Fig. 7, the symbol of a rotor frame 320 is omitted. The aircraft 300 is a manned aircraft capable of vertical takeoff and landing. The aircraft 300 includes a fuselage 310, a plurality of rotor frames 320, and a plurality of rotors 330. The plurality of rotors 330 include a first rotor and a second rotor. In the following, a description may be given assuming that the first rotor is any one of the plurality of rotor 330, and the second rotor is a rotor different from the first rotor among the plurality of rotor 330. These components will be further described.

The fuselage 310 is located in approximately the center of the aircraft 300. The fuselage 310 supports the plurality of rotors 330 via the rotor frames 320. The fuselage 310 includes an internal passenger compartment which is not illustrated. The passenger compartment is configured to accommodate passengers. The fuselage 310 may have a streamlined shape to reduce the air resistance when flying forward.

The rotor frames 320 are supported by the fuselage 310 above the fuselage 310. The rotor frames 320 are configured to expand outwardly from the support positions in the fuselage 310. The rotor frames 320 support the rotors 330 at both ends of each rotor frame 320. The material for the rotor frames 320 may be carbon fiber reinforced plastics (CFRP). The rotor frames 320 may have a mesh structure in which a plurality of rod-shaped members are connected to each other.

The rotors 330 are supported by the rotor frames 320 above the rotor frames 320. Each rotor 330 is configured to be rotatable at the position at which the rotor 330 is supported by the rotor frames 320. The rotor 330 generates buoyancy force and thrust force of the aircraft 300 by being rotated by a motor which is not illustrated. The rotational speed and rotational direction of the rotor 330 are controlled by a control system which is not illustrated. The plurality of rotors 330 are arranged such that the fuselage 310 or the second rotor is not located on a plane extending in a radial direction of the rotational surface 340 of the first rotor. In other words, the rotational surface 340 is the trajectory obtained by rotating an extended line of the line segment from the rotational center of the first rotor to the distal end. The arrangement of the rotors 330 will be described below.

### 8. Arrangement Method for Rotors 330

In the eighth section, the arrangement method for the rotors 330 will be described. The arrangement method includes a preparation step, and an arrangement step. In the preparation step, the fuselage 310 and the plurality of rotors 330 are prepared. The plurality of rotors 330 include the first rotor, and the second rotor. In the arrangement step, the plurality of rotors 330 are supported by the fuselage 310, and arranged such that even if the first rotor is broken, the first rotor does not collide with the fuselage 310 or the second rotor.

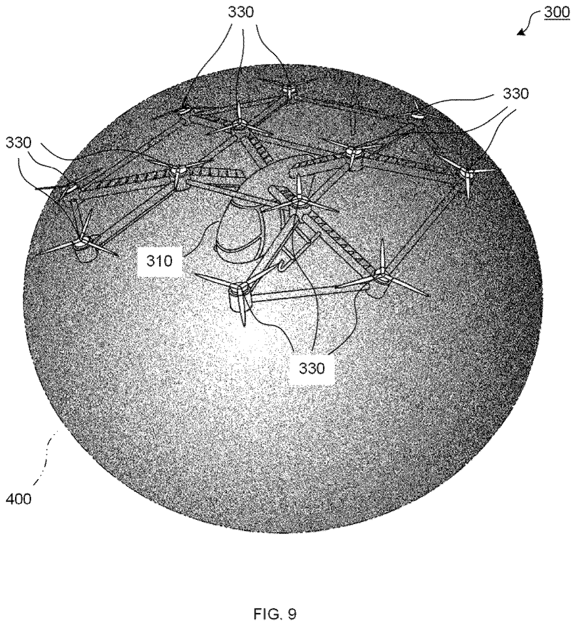

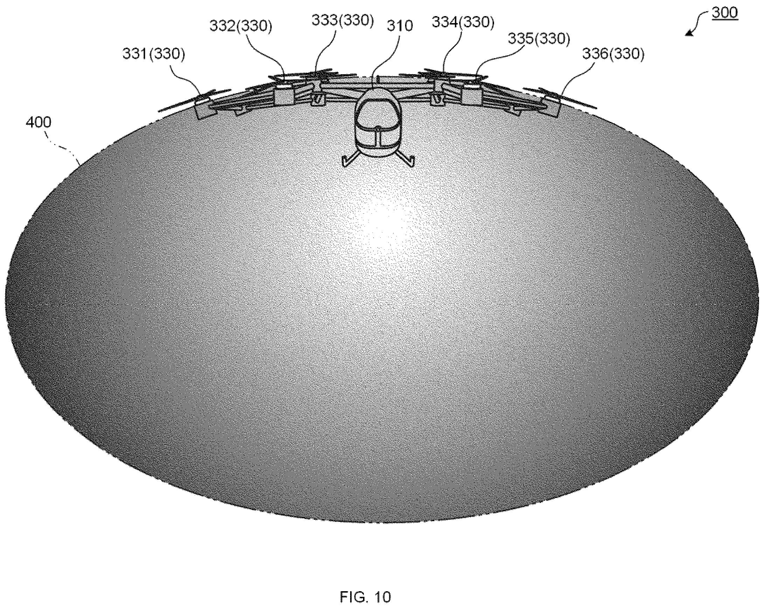

Fig. 9 is a perspective view illustrating the arrangement of the rotors 330 in the aircraft 300. Fig. 10 is a front view illustrating the arrangement of the rotors 330 in the aircraft 300. Fig. 9 and Fig. 10 illustrate a virtual curved surface 400 which is a virtual curved surface. In Fig. 10, a description will be given using a rotor 331, a rotor 332, a rotor 333, a rotor 334, a rotor 335 and a rotor 336 (hereinafter collectively referred to as "rotors 331 to 336") among the plurality of rotors 330 as examples.

The plurality of rotors 330 are arranged on the virtual curved surface 400 which is outside the fuselage 310 and convex outwardly of the fuselage 310. In Fig. 9, the rotors 330 are arranged on the virtual curved surface 400. In Fig. 10, the rotors 331 to 336 are arranged on the virtual curved surface 400. Because the rotor frames 320 supporting the rotors 330 extend from the fuselage 310 along the virtual curved surface 400, the rotors 330 are arranged like this. According to this aspect, when the plurality of rotors 330 are installed (arranged), fine adjustment of the rotors 330 is not necessary, thus the plurality of rotors 330 can be easily positioned.

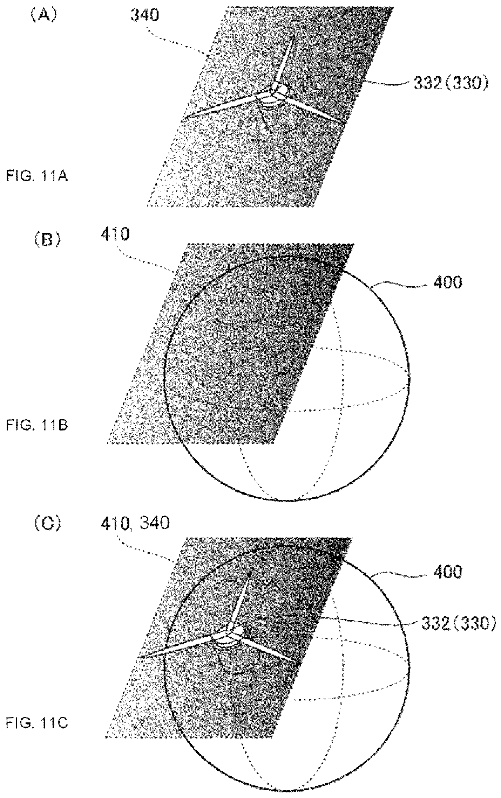

Fig. 11A is the rotational surface 340 of the rotor 332 which is an example of the first rotor, Fig. 11B is a tangent plane 410 to the virtual curved surface 400, and Fig. 11C is a view illustrating the composite view of Fig. 11A and Fig. 11B. The plurality of rotors 330 are arranged such that the rotational surface 340 and the tangent plane 410 to the virtual curved surface 400 approximately match. Specifically, in the arrangement step, the plurality of rotors 330 are supported by the fuselage 310, and arranged such that the fuselage 310 or the rotors 331, 333 to 336 (the second rotors) are not located on a plane extending in a radial direction of the rotational surface 340 of the rotor 332 (the first rotor). According to this aspect, when the rotors 330 are installed (arranged), it is not necessary to consider the positional relationship between the rotational surface 340 of each rotor 330 (the first rotor) and the fuselage 310 or the other rotors 330 (the second rotor), thus the rotors 330 can be easily positioned.

As illustrated in Fig. 11, the virtual curved surface 400 may be a spherical surface. According to this aspect, the plurality of rotors 330 can be arranged in a balanced way, thus the force during flight can be dispersed in a balanced way. Therefore, according to this aspect, the fuselage 310 during flight can be easily controlled.

According to the aspect of the second embodiment, the following (1) to (4) can be provided. (1) Even if breakage of a rotor 330 causes broken pieces thereof to be thrown by a centrifugal force, the probability of collision of the broken pieces with the other rotors 330 and the fuselage 310 can be reduced. Consequently, it is not necessary to set additional components needed for reinforcement to avoid damage to the fuselage 310, thus the weight of the aircraft 300 can be reduced. (2) The necessity to consider the secondary damage due to broken pieces of the rotor 330 can be reduced. Consequently, the necessity to ensure the redundancy of the rotor 330 is reduced, thus the configuration of the aircraft 300 can be simplified. (3) It is possible to reduce the necessity to set additional power by other rotors 330 to generate thrust to compensate the lift force in case of breakage of the rotor 330. Consequently, the power required for the motor and battery or the like can be lowered, thus the weight of the aircraft 300 can be reduced. (4) According to (1) to (3), increase of the payload and extension of the flight range of the fuselage 310 are made possible, thus the performance of the fuselage 310 can be improved.

As described above, when the aircraft 300 is a manned aircraft, even if the rotor 330 is broken, the possibility of causing harm to the pilot or passengers due to broken pieces of the rotor 330 can be reduced.

Although the embodiment of the present invention has been described above, the present invention is not limited to this, and in a range not departing from the technical idea of the invention, modifications may be made as appropriate.

### 9. Others

The invention may be provided in each of the aspects described in the following.
(1) An aircraft comprising: a fuselage; a rotor frame; and rotors, wherein the fuselage supports the rotor frame, the rotor frame supports the rotors, each rotor is configured to rotate at a position at which the rotor is supported by the rotor frame, the rotor frame includes a first frame portion, a second frame portion, and a contact point portion forming a contact point between the first frame portion and the second frame portion, and the rotor frame is configured to be folded such that a free end of the first frame portion and a free end of the second frame portion approach one another.
   According to this aspect, the rotor frame in a bulky shape can be made compact.
(2) The aircraft according to (1), wherein the rotor frame has a movable pivot in the second frame portion, and the rotor frame is configured to allow the second frame portion to be folded around the movable pivot as a fulcrum.
   According to this aspect, the rotor frame can be folded with a simple configuration.
(3) The aircraft according to (2), wherein the rotor frame supports the rotor at the contact point portion, and the rotor frame has the movable pivot at a position away from the contact point portion by a predetermined distance.
   According to this aspect, reduction in the strength of the entire aircraft can be prevented by adopting a configuration in which a load concentrated portion is folded to avoid the portion.
(4) The aircraft according to (3), wherein the second frame portion is configured to be swingable stepless in a range of motion.
   According to this aspect, the rotor frame can be fixed and transported using jigs in various forms without limiting the form of jigs.
(5) The aircraft according to any one of (1) to (4), wherein the rotor frame presents a Y shape.
   According to this aspect, the rotor frame presenting a Y shape can be preferably used.
(6) The aircraft according to any one of (1) to (5), wherein the aircraft is a manned aircraft.
   According to this aspect, the present embodiment is preferably used in a large rotor frame used for a manned aircraft.
(7) A folding method comprising: a preparation step; and a folding step, wherein in the preparation step, a first frame portion, a second frame portion, and a contact point portion forming a contact point between the first frame portion and the second frame portion are prepared, and in the folding step, the rotor frame is folded such that a free end of the first frame portion and a free end of the second frame portion approach one another.
   According to this aspect, the rotor frame in a bulky shape can be made compact.
(8) An aircraft comprising: a fuselage; and a plurality of rotors, wherein the fuselage supports the plurality of rotors, the plurality of rotors include a first rotor and a second rotor, and the plurality of rotors are arranged such that the fuselage or the second rotor is not located on a plane extending in a radial direction of a rotational surface of the first rotor.
   According to this aspect, the following (1) to (4) can be provided. (1) Even if breakage of a rotor causes broken pieces thereof to be thrown by a centrifugal force, the probability of collision of the broken pieces with the other rotors and the fuselage can be reduced. Consequently, it is not necessary to set additional components needed for reinforcement to avoid damage to the fuselage, thus the weight of the aircraft can be reduced. (2) The necessity to consider the secondary damage due to broken pieces of the rotor can be reduced. Consequently, the necessity to ensure the redundancy of rotors is reduced, thus the configuration of the aircraft can be simplified. (3) It is possible to reduce the necessity to set additional power by other rotors to generate thrust to compensate the lift force in case of breakage of the rotor. Consequently, the power required for the motor and battery or the like can be lowered, thus the weight of the aircraft can be reduced. (4) According to (1) to (3), increase of the payload and extension of the flight range of the fuselage are made possible, thus the performance of the fuselage can be improved.
(9) The aircraft according to (8), wherein the plurality of rotors are arranged on a virtual curved surface which is outside the fuselage and convex outwardly of the fuselage.
   According to this aspect, when a rotor is installed (arranged), fine adjustment of the rotor is not necessary, thus the rotor can be easily positioned.
(10) The aircraft according to (9), wherein the plurality of rotors are arranged such that the rotational surface and a tangent plane to the curved surface approximately match.
   According to this aspect, when a rotor is installed (arranged), it is not necessary to consider the positional relationship between the rotational surface of the rotor and the fuselage or the other rotors, thus the rotor can be easily positioned.
(11) The aircraft according to (9) or (10), wherein the curved surface is a spherical surface.
   According to this aspect, the plurality of rotors can be arranged in a balanced way, thus the force during flight can be dispersed in a balanced way. Therefore, according to this aspect, the fuselage during flight can be easily controlled.
(12) The aircraft according to any one of (8) to (11), wherein the aircraft is a manned aircraft.
   According to this aspect, even if the rotor is broken, the possibility of causing harm to the pilot or passengers due to broken pieces of the rotor can be reduced.
(13) An arrangement method comprising: a preparation step; and an arrangement step, wherein in the preparation step, a fuselage and a plurality of rotors are prepared, the plurality of rotors include a first rotor and a second rotor, and in the arrangement step, the plurality of rotors are supported by the fuselage and arranged such that even if the first rotor is broken, the first rotor does not collide with the fuselage or the second rotor.
   According to this aspect, the following (1) to (4) can be provided. (1) Even if breakage of a rotor causes broken pieces thereof to be thrown by a centrifugal force, the probability of collision of the broken pieces with the other rotors and the fuselage can be reduced. Consequently, it is not necessary to set additional components needed for reinforcement to avoid damage to the fuselage, thus the weight of the aircraft can be reduced. (2) The necessity to consider the secondary damage due to broken pieces of the rotor can be reduced. Consequently, the necessity to ensure the redundancy of rotors is reduced, thus the configuration of the aircraft can be simplified. (3) It is possible to reduce the necessity to set additional power by other rotors to generate thrust to compensate the lift force in case of breakage of the rotor. Consequently, the power required for the motor and battery or the like can be lowered, thus the weight of the aircraft can be reduced. (4) According to (1) to (3), increase of the payload and extension of the flight range of the fuselage are made possible, thus the performance of the fuselage can be improved.
(14) The arrangement method according to (13), wherein in the arrangement step, the plurality of rotors are supported by the fuselage and arranged such that the fuselage or the second rotor is not located on a plane extending in a radial direction of a rotational surface of the first rotor.

According to this aspect, the following (1) to (4) can be provided. (1) Even if breakage of a rotor causes broken pieces thereof to be thrown by a centrifugal force, the probability of collision of the broken pieces with the other rotors and the fuselage can be reduced. Consequently, it is not necessary to set additional components needed for reinforcement to avoid damage to the fuselage, thus the weight of the aircraft can be reduced. (2) The necessity to consider the secondary damage due to broken pieces of the rotor can be reduced. Consequently, the necessity to ensure the redundancy of rotors is reduced, thus the configuration of the aircraft can be simplified. (3) It is possible to reduce the necessity to set additional power by other rotors to generate thrust to compensate the lift force in case of breakage of the rotor. Consequently, the power required for the motor and battery or the like can be lowered, thus the weight of the aircraft can be reduced. (4) According to (1) to (3), increase of the payload and extension of the flight range of the fuselage are made possible, thus the performance of the fuselage can be improved. Provided aspects are not limited to these.

### [Symbol explanation]

100 AIRCRAFT
110 FUSELAGE
120 ROTOR FRAME
121 FIRST FRAME PORTION
122 SECOND FRAME PORTION
123 CONTACT POINT PORTION
124 FREE END
125 FREE END
126 MOVABLE PIVOT
128 ARROW
129 THIRD FRAME PORTION
130 ROTOR
220 ROTOR FRAME
221 FIRST FRAME PORTION
222 SECOND FRAME PORTION
223 CONTACT POINT PORTION
224 FREE END
225 FREE END
226 MOVABLE PIVOT
228 ARROW
231 FIRST FRAME PORTION
232 SECOND FRAME PORTION
234 FREE END
235 FREE END
236 MOVABLE PIVOT
238 ARROW
300 AIRCRAFT
310 FUSELAGE
320 ROTOR FRAME
330 ROTOR
331 ROTOR
332 ROTOR
333 ROTOR
334 ROTOR
335 ROTOR
336 ROTOR
340 ROTATIONAL SURFACE
400 VIRTUAL CURVED SURFACE
410 TANGENT PLANE

## Claims

1. An aircraft comprising:
a fuselage; a rotor frame; and rotors,
wherein the fuselage supports the rotor frame,
the rotor frame supports the rotors,
each rotor is configured to rotate at a position at which the rotor is supported by the rotor frame,
the rotor frame includes a first frame portion, a second frame portion, and a contact point portion forming a contact point between the first frame portion and the second frame portion, and
the rotor frame is configured to be folded such that a free end of the first frame portion and a free end of the second frame portion approach one another.

2. The aircraft according to Claim 1,
wherein the rotor frame has a movable pivot in the second frame portion, and
the rotor frame is configured to allow the second frame portion to be folded around the movable pivot as a fulcrum.

3. The aircraft according to Claim 2,
wherein the rotor frame supports the rotor at the contact point portion, and
the rotor frame has the movable pivot at a position away from the contact point portion by a predetermined distance.

4. The aircraft according to Claim 3,
wherein the second frame portion is configured to be swingable stepless in a range of motion.

5. The aircraft according to any one of Claims 1 to 4,
wherein the rotor frame presents a Y shape.

6. The aircraft according to any one of Claims 1 to 5,
wherein the aircraft is a manned aircraft.

7. A folding method comprising:
a preparation step; and a folding step, wherein in the preparation step, a first frame portion, a second frame portion, and a contact point portion forming a contact point between the first frame portion and the second frame portion are prepared, and
in the folding step, the rotor frame is folded such that a free end of the first frame portion and a free end of the second frame portion approach one another.

8. An aircraft comprising:
a fuselage; and a plurality of rotors,
wherein the fuselage supports the plurality of rotors,
the plurality of rotors include a first rotor and a second rotor, and
the plurality of rotors are arranged such that the fuselage or the second rotor is not located on a plane extending in a radial direction of a rotational surface of the first rotor.

9. The aircraft according to Claim 8,
wherein the plurality of rotors are arranged on a virtual curved surface which is outside the fuselage and convex outwardly of the fuselage.

10. The aircraft according to Claim 9,
wherein the plurality of rotors are arranged such that the rotational surface and a tangent plane to the curved surface approximately match.

11. The aircraft according to Claim 9 or 10,
wherein the curved surface is a spherical surface.

12. The aircraft according to any one of Claims 8 to 11,
wherein the aircraft is a manned aircraft.

13. An arrangement method comprising:
a preparation step; and an arrangement step,
wherein in the preparation step, a fuselage and a plurality of rotors are prepared,
the plurality of rotors include a first rotor and a second rotor, and
in the arrangement step, the plurality of rotors are supported by the fuselage and arranged such that even if the first rotor is broken, the first rotor does not collide with the fuselage or the second rotor.

14. The arrangement method according to Claim 13,
wherein in the arrangement step, the plurality of rotors are supported by the fuselage and arranged such that the fuselage or the second rotor is not located on a plane extending in a radial direction of a rotational surface of the first rotor.
